# EUROPEAN PATENT SPECIFICATION

(11) **EP 0 362 171 B1**
(45) Date of publication and mention of the grant of the patent: **02.03.1994**
(21) Application number: 89850306.5
(22) Date of filing: 19.09.1989
(51) Int. Cl.: B23B 27/14

(54) **Double-sided cutting insert**
Zweiseitiger Schneideeinsatz
Plaquette de coupe double face

(30) Priority: 26.09.1988 SE 8803389
(43) Date of publication of application: 04.04.1990
(73) Proprietor: SANDVIK AKTIEBOLAG, 811 81 Sandviken (SE)
(72) Inventor: Pettersson, Lars Ture, Glen Rock, N.J. 07452 (US); Wiman, Jörgen Viggo, S-811 52 Sandviken (SE)
(74) Representative: Taquist, Lennart

(56) References cited:
- DD-A- 250 273
- DE-A- 3 332 821
- GB-A- 2 092 032
- US-A- 3 395 434
- US-A- 3 875 663
- US-A- 4 312 250
- US-A- 4 507 024
- WERKSTATT UND BETRIEB vol.114, no. 5, May 1981, München, D. H.D. SCHUBERT : "Auswahl geeigneter Spanbrecherformen bei Wendeschneidplatten". page 295, figures 2, 3, position M-37*

## Description

The present invention relates to a double-sided cutting insert according to the preamble of claim 1, see US-A-3 875 663.

A double-sided cutting insert for chipforming machining is disclosed in US-Patent 4,312,250 in which each upper and lower face of the insert has a centrally raised portion for the purpose of giving the insert an adequate support surface when located against a bottom support. The cutting edge provided at the lower face and its adjacent chip face are arranged at some distance from the bottom support and the insert is therefore susceptible to failure when subjected to large tensile forces.

It is an object of the present invention to provide a double-sided cutting insert with as good strength as possible during machining.

It is another object of the present invention to provide a cutting insert equipped with a plurality of cutting edges.

These and other objects are achieved by the characterizing features outlined in the following patent claims.

The invention will now be described more in detail with reference to the accompanying drawings showing:
Fig. 1, a plan view of a cutting insert according to the invention;
Fig. 2, a side view of the insert of Fig. 1;
Fig. 3, a partial sectional enlarged view along the line III-III in Fig. 1, in which a portion of a bottom support is shown adjacent the insert;
Fig. 4, a partial sectional enlarged view along the line IV-IV in Fig. 1, in which a portion of a bottom support is shown adjacent the insert;
Fig. 5, a perspective view of the insert in Fig. 1;
Figs. 6 and 7, an alternative embodiment of an insert of the invention as shown in plan view and in a side view, respectively.

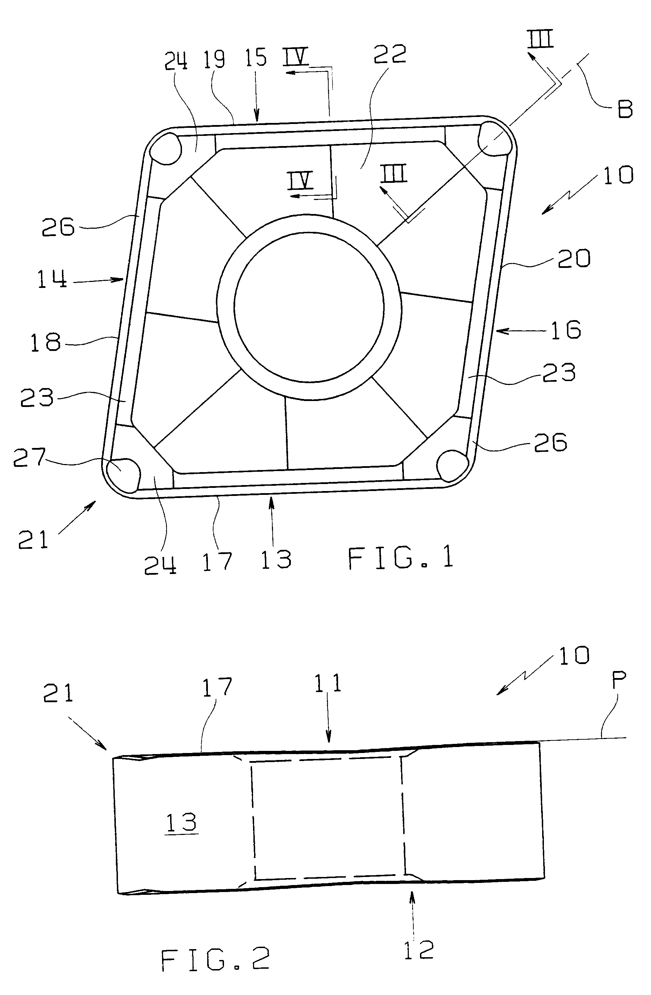

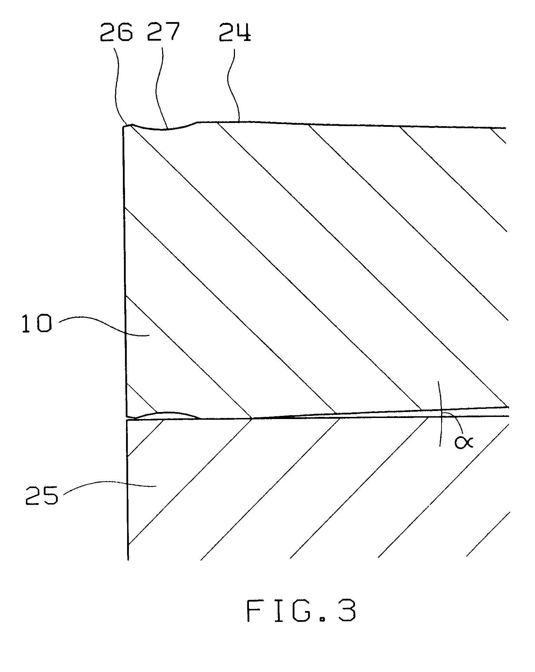

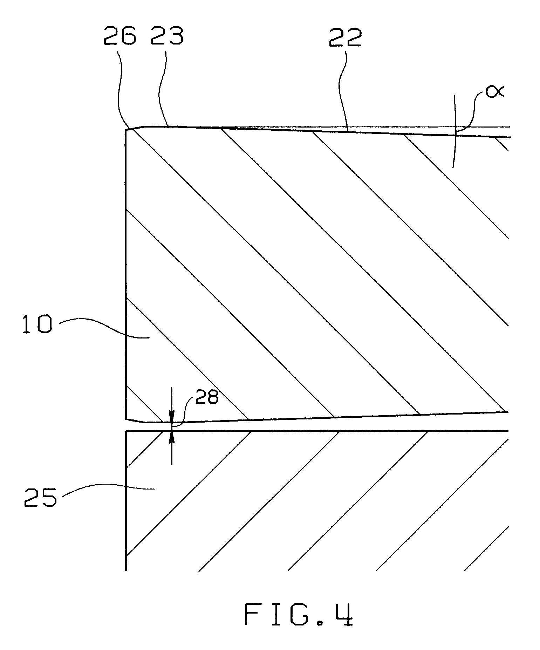

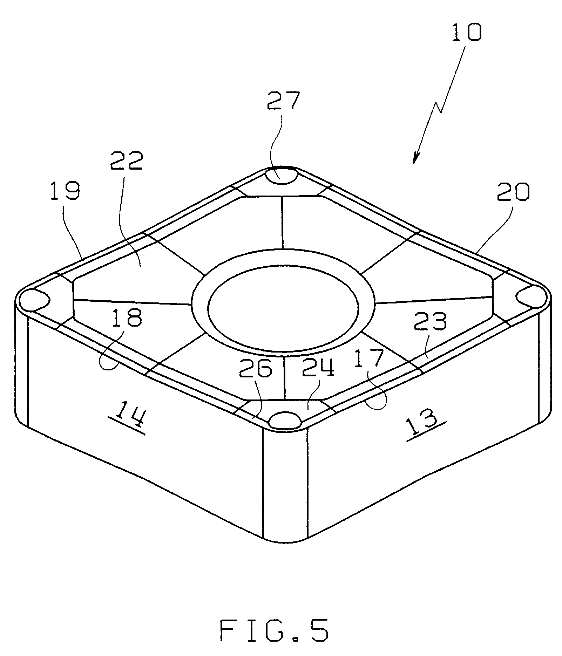

Figs. 1 - 5 show a cutting insert 10 according to this invention, preferably for a lathe cutting tool. The insert 10 is manufactured of a ceramic material or cemented carbide or a similar material. The insert is in the form of a body of generally polygonal shape; in this case it has rhombic basic shape and has a central aperture for clamping purpose. The insert includes an upper face 11 and an opposite bottom face 12 which are mainly identical. The faces 11 and 12 intersect with continuously extending side surfaces 13 to 16 to define cutting edges 17 to 20 along the periphery of said upper face 11 and said bottom face 12. The side surfaces 13-16 meet at rounded cutting corners 21. The cutting corner 21 defines a bisector B. Each side has a central depression 22 which slopes downwards and inwards at an angle α from chip faces 23 and from their corner portions 24. The angle α is selected in the range 0.5° - 8°. Each face 23 is mainly perpendicular towards the side surfaces 13-16 and is intended for chip upsetting during machining. The corner portions 24 are arranged in a plane P. Each corner portion 24 is oriented perpendicular in relation to the adjacent side surfaces 13-16 and is intended, in an active position, to upset chips in similarity with the face 23. The face 23 is provided with a certain play 28 from the plane P or the bottom support 25. This play 28 is in the order of 0.05 - 0.5 mm. The face 23 and corner portion 24, via a surrounding negative bevelled face 26, are directly or indirectly connected with the cutting edges 17. The corner portions 24 are symmetrically arranged in relation to the bisector B of the adjacent cutting corner 21. The largest width of the cutting corner in a direction parallel with said bisector B is larger than the largest width of the face 23 as seen perpendicular to adjacent cutting edge. Each of the cutting corners 21 is provided with a depression 27 which is arranged symmetrically in relation to the bisector B of said corner. This depression intersects with the bevelled face 26 and extends inwardly from said bevelled face and occupies about half of the length of the corner portion 24 as seen in the length direction of the bisector. The largest width of the depression perpendicularly from said bisector is less than the largest width of said corner portion in the same direction.

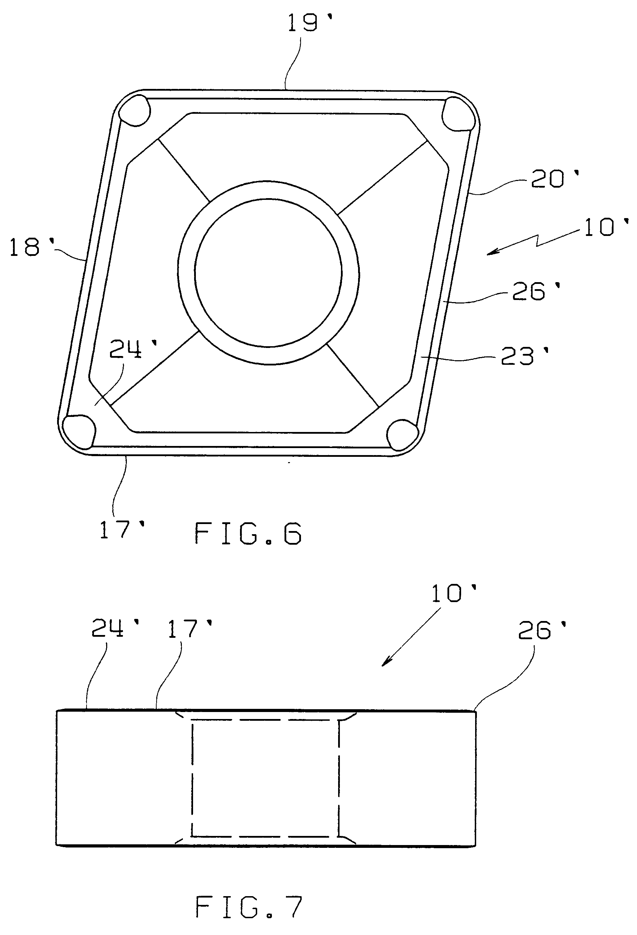

Figs. 6 and 7 illustrate an alternative embodiment of an insert 10' of this invention. The insert has a shape identical with insert 10 with the exception, however, that the corner portions 24' and the faces 23 are located in the same plane P. The insert 10' is intended to abut against a support along the entire periphery of the insert whereby the support surfaces of the insert are arragend in the most favourable position.

The inserts 10 and 10' can also be provided with projections in the chip face 23, 24 and 23', 24' of the type being described in SE-A-8803354-3 which is herein incorporated in terms of its description.

The present invention thus relates to a double-sided insert for chipforming machining of the type wherein the insert has combined support and chip faces which are so designed that the risk for cracking failure is minimized.

## Claims

1. Double-sided cutting insert, in particular of ceramic material, for chip cutting machining comprising a body of generally polygonal shape having an upper face (11), an opposite lower face (12) and clearance faces (13-16) intersecting said upper and lower faces to define cutting edges (17-20, 17'-20'), which extend to the cutting corners (21) of the polygonal body, each said upper and lower face having a centrally recessed portion (22), which adjoins a combined chip and support face, characterized in that a bevelled face (26, 26') adjoins each cutting edge and the combined support and chip face (24; 23', 24'), which extends partially on both sides of the bisector (B) of the cutting corners (21), and is oriented substantially perpendicularly to the clearance faces (13-16), whereby the bevelled face is bevelled such that an inner obtuse angle is formed between said bevelled face and the adjacent support and chip face.

2. Cutting insert as defined in claim 1, characterized in that the combined support and chip face (24) has an extension that is confined to an area around each cutting corner (21).

3. Cutting insert as defined in claim 1, characterized in that the combined support and chip face has an extension alon the periphery of the insert.

4. Cutting insert as defined in claim 1, characterized in that the bevelled face (26, 26') is thinner in the cutting corners (21) than at a location at some distance from said corners.

5. Cutting insert as defined in any of the preceding claims, characterized in that the recess (22) adjoins a central aperture.

6. Cutting insert as defined in claim 1 or 2, characterized in that the cutting edge (17-20) is mainly concave in shape between two adjacent cutting corners (21).

7. Cutting insert as defined in any of the preceding claims, characterized in that the insert (10, 10') has a rhombic basic shape.

8. Cutting insert as defined in claim 1, characterized in that the combined chip and support faces (23) are continuous along respective ones of the cutting edges and are coplanar with said corner chip and support faces (24).

9. Cutting insert as defined in any of the preceding claims, characterized in that it is made of a ceramic material.

## Patentansprüche

1. Zweiseitiger Schneideinsatz, insbesondere aus keramischem Material, für spanabhebendes Bearbeiten mit einem Körper von im allgemeinen polygonaler Gestalt mit einer oberen Fläche (11), einer gegenüberliegenden unteren Fläche (12) und Freiflächen (13-16), welche die obere und untere Fläche schneiden, um Schneidkanten (17-20, 17'-20') zu bilden, die sich zu den Schneidkanten (21) des polygonalen Körpers erstrecken, wobei jede obere und untere Fläche einen in der Mitte ausgenommenen Teil (22) hat, der an eine kombinierte Span- und Stützfläche angrenzt, dadurch gekennzeichnet, daß eine abgeschrägte Fläche (26, 26') an jede Schneidkante und die kombinierte Stütz- und Spanfläche (24; 23', 24') angrenzt, welche sich teilweise auf beiden Seiten der Winkelhalbierenden (B) der Schneidecken (21) erstreckt, und im wesentlichen senkrecht zu den Freiflächen (13-16) ausgerichtet ist, wobei die abgeschrägte Fläche derart abgeschrägt ist, daß ein innerer stumpfer Winkel zwischen der abgeschrägten Fläche und der benachbarten Stütz- und Spanfläche gebildet ist.

2. Schneideinsatz nach Anspruch 1, dadurch gekennzeichnet, daß die kombinierte Stütz- und Spanfläche (24) eine Erstreckung hat, die auf eine Fläche um jede Schneidecke (21) herum beschränkt ist.

3. Schneideinsatz nach Anspruch 1, dadurch gekennzeichnet, daß die kombinierte Stütz- und Spanfläche eine Erstreckung längs des Umfanges des Einsatzes hat.

4. Schneideinsatz nach Anspruch 1, dadurch gekennzeichnet, daß die abgeschrägte Fläche (26, 26') in den Schneidecken (21) dünner ist als an einem Ort in einem gewissen Abstand von diesen Ecken.

5. Schneideinsatz nach einem der vorhergehenden Ansprüche, dadurch gekennzeichnet, daß die Ausnehmung (22) an die mittige Öffnung angrenzt.

6. Schneideinsatz nach Anspruch 1 oder 2, dadurch gekennzeichnet, daß die Schneidkante (17-20) eine hauptsächlich konkave Gestalt zwischen zwei benachbarten Schneidecken (21) hat.

7. Schneideinsatz nach einem der vorhergehenden Ansprüche, dadurch gekennzeichnet, daß der Einsatz (10, 10') eine rhombische Grundgestalt hat.

8. Schneideinsatz nach Anspruch 1, dadurch gekennzeichnet, daß die kombinierten Span- und Stützflächen (23) längs entsprechender Flächen der Schneidkanten kontinuierlich sind und mit den Eckenspan- und Stützflächen (24) in einer Ebene liegen.

9. Schneideinsatz nach einem der vorhergehenden Ansprüche, dadurch gekennzeichnet, daß er aus keramischem Material hergestellt ist.

## Revendications

1. Plaquette de coupe double face, réalisée notamment en un matériau céramique, pour un usinage de coupe avec formation de copeaux, comprenant un corps possédant une forme générale polygonale possédant une face supérieure (11) et une face inférieure opposée (12) et des faces en dépouille (13-16) recoupant lesdites faces supérieure et inférieure en définissant des arêtes de coupe (17-20, 17'-20'), qui s'étendent jusqu'aux coins de coupe (21) du corps polygonal, chacune desdites faces supérieure et inférieure possédant une partie (22) dont le centre est en renfoncement, qui réunit une face combinée de dégagement de copeaux et de support, caractérisée en ce qu'une face biseautée (26, 26') est adjacente à chaque arête de coupe et à la face combinée de support et de dégagement de copeaux (24; 23', 24'), qui s'étend partiellement des deux côtés de la bissectrice (B) des coins de coupe (21), et est orientée sensiblement perpendiculairement aux surfaces en dépouille (13-16), la face biseautée étant biseautée de telle sorte qu'un angle intérieur obtus est formé entre ladite face biseautée et la face adjacente de support et de dégagement de copeaux.

2. Plaquette de coupe selon la revendication 1, caractérisée en ce que la face combinée de support et de dégagement de copeaux (24) possède un prolongement qui est limité à une zone entourant chaque coin de coupe (21).

3. Plaquette de coupe selon la revendication 1, caractérisée en ce que la face combinée de support et de dégagement de copeaux possède un prolongement le long de la périphérie de la plaquette.

4. Plaquette de coupe selon la revendication 1, caractérisée en ce que la face biseautée (26, 26') est plus mince au niveau des angles de coupe (21) qu'en un emplacement situé à une certaine distance desdits coins.

5. Plaquette de coupe selon l'une quelconque des revendications précédentes, caractérisée en ce que le renfoncement (22) est adjacent à une ouverture centrale.

6. Plaquette de coupe selon la revendication 1 ou 2, caractérisée en ce que l'arête de coupe (17-20) possède une forme principalement concave entre deux coins de coupe voisins (21).

7. Plaquette de coupe selon l'une quelconque des revendications précédentes, caractérisée en ce que la plaquette (10, 10') possède une forme de base en losange.

8. Plaquette de coupe selon la revendication 1, caractérisée en ce que les faces combinées de dégagement de copeaux et de support (23) sont des faces continues le long d'arêtes respectives de coupe et sont coplanaires avec lesdites faces combinées de dégagement de copeaux et de support (24).

9. Plaquette de coupe selon l'une quelconque des revendications précédentes, caractérisée en ce qu'elle est réalisée en un matériau céramique.
